**Europäisches Patentamt**

**European Patent Office**

**Office européen des brevets**

(19)

(11) Veröffentlichungsnummer: **0 037 069 B2**

(12) # NEUE EUROPÄISCHE PATENTSCHRIFT

(45) Veröffentlichungstag der neuen Patentschrift:
**07.08.91 Patentblatt 91/32**

(51) Int. Cl.$^5$: **H04Q 7/04**

(21) Anmeldenummer: **81102241.7**

(22) Anmeldetag: **25.03.81**

---

(54) **Mobiles Funknetz mit Einrichtungen zum Auffinden mobiler ausländischer Funkteilnehmer.**

---

(30) Priorität: **28.03.80 DE 3012231**

(43) Veröffentlichungstag der Anmeldung:
**07.10.81 Patentblatt 81/40**

(45) Bekanntmachung des Hinweises auf die
Patenterteilung:
**25.01.84 Patentblatt 84/04**

(45) Bekanntmachung des Hinweises auf die
Entscheidung über den Einspruch:
**07.08.91 Patentblatt 91/32**

(84) Benannte Vertragsstaaten:
**AT BE CH FR GB IT LI LU NL SE**

(56) Entgegenhaltungen:
**DE-A- 2 040 028**

(56) Entgegenhaltungen:
**DE-A- 2 310 188**
**DE-A- 2 536 452**
**DE-A- 2 659 615**
**DE-A- 2 709 855**
**ERICSSON REVIEW, Band 57, Heft 1, 1980,**
**STOCKHOLM (SE) O. BIILSTRÖM et al.: "A**
**Public Automatic Mobile Telephone System",**
**Seiten 26-35**
**Nordic Mobile Telephone, NMT DOC: 1, 1980,**
**Februar 1980, Kapitel 2.4**
**Nordic Mobile Telephone, NMT DOC. 2, 1976,**
**Annex IV, Kapitel 1.3.1, 3.5, 3.6, 6.3, 9.4, 3.3**

(73) Patentinhaber: **Siemens Aktiengesellschaft**
**Wittelsbacherplatz 2**
**W-8000 München 2 (DE)**

(72) Erfinder: **Kammerlander, Karl**
**Wiesenstrasse 10**
**W-8190 Wolfratshausen (DE)**

EP 0 037 069 B2

## Beschreibung

Mobiles Funknetz mit Einrichtungen zum Auffinden mobiler ausländischer Funkteilnehmer

Die Erfindung betrifft ein mobiles Funknetz auf Landesebene, bestehend aus einer Anzahl Funkkonzentratoren in einer gegenseitigen räumlichen Anordnung nach Art eines Zellularsystems mit sich überlappenden Funkbereichen, die mit Überleiteinrichtungen zum öffentlichen Fernsprechnetz in Verbindung stehen, bei dem zum Auffinden mobiler Funkteilnehmer für einen automatischen Verbindungsaufbau den Überleiteinrichtungen Heimatdateien zugeordnet sind, in denen die Verkehrsdaten der ihnen jeweils zugeordneten inländischen mobilen Funkteilnehmer, wie Betriebszustand und augenblickliche Funkbereichszugehörigkeit, fortlaufend registriert sind, wobei den Heimatdateien jeweils eine Fremddatei zugeordnet ist und die Funkkonzentratoren jeweils eine Aktivdatei aufweisen.

Mobile Funknetze dieser Art sind im Prinzip bekannt, wie z.B. aus der DE-A Nr.2659615 hervorgeht. Wird in einem derartigen Netz von einem ortsfesten Fernsprechteilnehmer ein mobiler Funkteilnehmer angewählt, so erreicht der Ruf auch dann die gewählte mobile Teilnehmerstation, wenn sich diese in einem anderen Funkbereich als ihrer Heimatfunkzone befindet. Die Herstellung einer Verbindung kann somit zu allen denjenigen mobilen Teilnehmern erfolgen, die innerhalb des Grossraumes eines Funknetzes beheimatet sind und sich an einer beliebigen Stelle innerhalb dieses Grossraumes aufhalten. Geht man davon aus, dass ein Funknetz ein ganzes Land überstreicht, so können alle mobilen inländischen Funkteilnehmer durch Ruf automatisch erreicht werden. Ähnliche Einrichtungen zum automatischen Auffinden von Fernsprechteilnehmern mit für die rufende Station unbekanntem Standort sind durch die DE-A Nr. 2310188 und DE-A Nr.2536452 bekannt.

In den Literaturstellen NMT DOC.1. 1980 Februar 1980, Abschnitt 2.4 und NMT DOC.2. 1976, Annex IV, Kap. 1,3,6 und 9 wird das Funknetz nach dem Nordischen Mobil-Telefon beschrieben, bei dem es sich um ein einheitliches System der vier Länder Norwegen, Schweden, Dänemark und Finnland handelt. Bei diesem Mobil-Telefonsystem ist vorgesehen, daß den einzelnen mobilen Funkteilnehmern neben einer Kennung über ihren geographischen Aufenthaltsort noch eine Landeskennung zugeordnet ist.

Solche bekannten Funknetze weisen den Nachteil auf, dass mobile ausländische Funkteilnehmer nicht systematisch erfasst werden können, weil diese beim Funkeintritt in einen beliebigen Funkbereich zwar in den Aktivdateien erfasst werden, aber keiner Heimatdatei zugeordnet werden können. Die Auffindung des ausländischen Funkteilnehmers bleibt somit dem Zufall überlassen.

Der Erfindung liegt die Aufgabe zugrunde, ein Funknetz anzugeben, bei dem ein automatischer Verbindungsaufbau zu einem mobilen ausländischen Funkteilnehmer unter seiner eigenen Funkrufnummer auf einfache, sichere und wenig störungsanfällige Weise möglich ist, wobei sich der ausländische Funkteilnehmer an einer beliebigen Stelle innerhalb des Grossraumes daes inländischen Funknetzes aufhält.

Diese Aufgabe wird erfindungsgemäss dadurch gelöst, dass zum Auffinden mobiler ausländischer Funkteilnehmer zusätzlich Ausländerdateien solchen Überleiteinrichtungen zugeordnet sind, an die zentrale Grenzbereiche zum Nachbarland darstellende Funkbereiche mit ihren Funkkonzentratoren angeschlossen sind, und in diesen Ausländerdateien die jeweils ausländischen Funkteilnehmer des angrenzenden Landes mit ihrer Funkrufnummer und ihrem momentanen Aufenthaltsort erfaßt sind, und daß zur einwandfreien Erfassung aller im Funknetz operierender mobiler Funkteilnehmer die Funkrufnummer jedes mobilen Teilnehmers in an sich bekannter Weise mit einer Landeskennung versehen ist.

Der Erfindung liegt die Erkenntnis zugrunde, dass durch eine zusätzliche Ausländerdatei für jedes Land eine Ersatzheimatdatei für die ausländischen Funkteilnehmer geschaffen wird, mit deren Hilfe auch sie im Inland (z.B. Bundesrepublik Deutschland) mit einem Ruf erreichbar sind.

Weitere Vorteile der Erfindung sind in den Ansprüchen 2 und 3 angegeben.

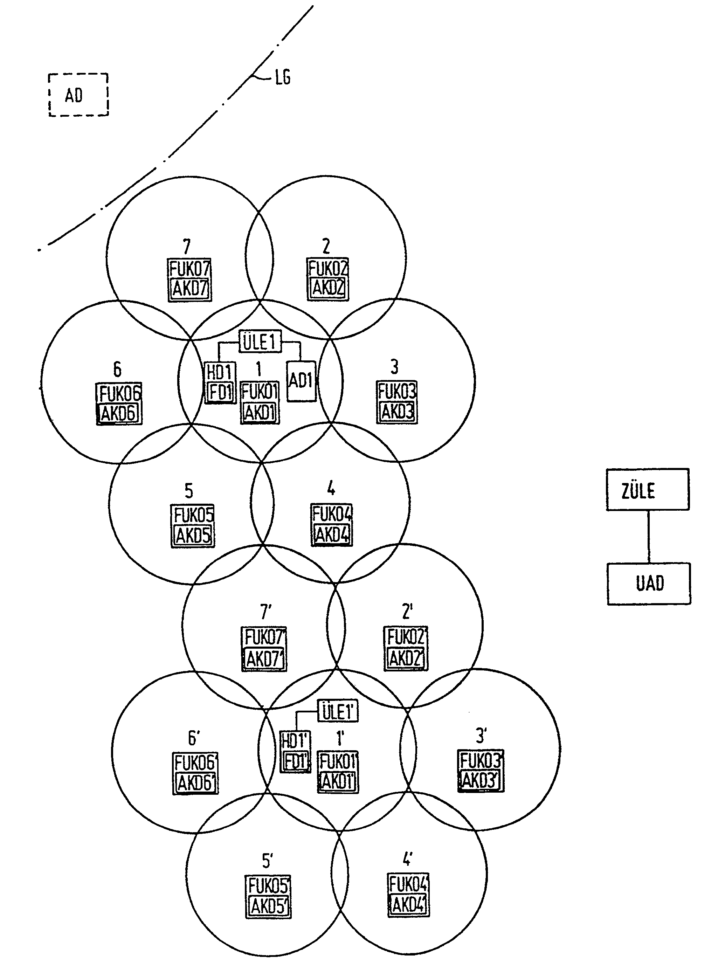

Anhand eines in der Zeichnung dargestellten Ausführungsbeispieles soll die Erfindung im folgenden noch näher erläutert werden.

In der Figur ist das Funknetz eines Landes z.B. das der Bundesrepublik Deutschland (im folgenden als « Inland » bezeichnet) dargestellt. Es besteht aus den Funkkonzentratoren FUKO1 .. FUKO7 und FUKO1'... FUKO7' in einer gegenseitigen räumlichen Anordnung nach Art eines Zellularsystems mit sich überlappenden Funkbereicher 1 ... 7 und 1'... 7'. Dabei sind die den mit einem' unc ohne einen' versehenen Nummern der Funkbereiche unterschiedliche Frequenzen zugeordnet Die Funkbereiche 1 bzw. 1' sind durch die Überleiteinrichtungen ÜLE1 bzw. ÜLE1' zu Funkvermittlungsstellen für die Verbindung zwischen der verschiedenen Funkbereichen und zu den Wählvermittlungsstellen des öffentlichen Fernsprechnetzes erweitert. Die in der Figur dargestellten bei den Überleiteinrichtungen ÜLE1 bzw. ÜLE1' mi ihren jeweils sieben Funkbereichen 1 ... 7 bzw. 1 ... 7' stellen natürlich nur einen kleinen Ausschnitt des mobilen Funknetzes für das Inland dar, da zu Überdeckung des Landes bedeutend mehr Funk bereiche und Überleiteinrichtungen nötig sind.

Den Überleiteinrichtungen ÜLE1 bzw. ÜLE1' is jeweils eine Heimatdatei HD1 bzw. HD1' zugeord net. Jeder zugelassene Funkteilnehmer ist in de Heimat-

datei der Überleiteinrichtung seiner Hei matfunkzone registriert. Die in den Funkbereichei 1 ... 7 beheimateten Funkteilnehmer sind demnacl in der Heimatdatei HD1 der Überleiteinrichtung ÜLE1 und die in den Funkbereichen 1'... 7' behei mateten Funkteilnehmer sind in der Heimatdate HD1' der Überleiteinrichtung ÜLE1' registriert Diese Registrierung enthält neben der Funkruf nummer des betreffenden Funkteilnehmers nocl andere Klassifizierungen wie Prioritäten, Berechti gungen, Sperr- und Sondervermerke.

Die Heimatdateien HD1 bzw. HD1' weisen je weils eine Fremddatei FD1 bzw. FD1' als Unterda tei auf. In jeder Fremddatei FD1 bzw. FD1' sind all in einer anderen Funkzone beheimateten, aber ge genwärtig in der betreffenden Funkzone operierenden Funkteilnehmer registriert.

Darüber hinaus ist jedem Funkkonzentrator FUKO1 FUKO7 bzw. FUKO1'... FUKO7' eine Aktivdatei ADK1 ... AKD7 bzw. AKD1'... AKD7' zugeordnet. Jede Aktivdatei erfasst jeweils alle in ihrem Funkbereich operierenden Funkteilnehmer. Im Rahmen der in der Funkorganisation stattfindenden Anwesenheitsprüfung der Funkteilnehmer, die durch die Aktivdateien gesteuert wird, ist jede Aktivdatei immer auf dem aktuellen Stand.

Operiert nun ein Funkteilnehmer im eigenen Funkbereich, z.B. im Funkbereich 3, so wird er in der Aktivdatei AKD3 erfasst und über den Datenkanal des Funkkonzentrators FUKO3 zur ÜberleiteinrichtungÜLE1 gemeldet. In der zugehörigen Heimatdatei HD1 wird ein Aktivvermerk eingetragen. Ausser der Funkrufnummer des Funkteilnehmers enthält die Heimatdatei die Nummer des derzeitigen Aufenthaltsfunkbereiches (in diesem Fall 3) als Voraussetzung für die Wiederauffindung des Funkteilnehmers.

Operiert ein fremder Teilnehmer in einem Funkbereich (z.B. der im Funkbereich 2' beheimatete Funkteilnehmer im Funkbereich 3), so wird dieser zunächst in gleicher Weise in der Aktivdatei AKD3 erfasst und zur Überleiteinrichtung ÜLE1 gemeldet. Da er aber dort in der Heimatdatei HD1 nicht gefunden werden kann, wird er deshalb in der Fremddatei FD1 mit dem Aktivvermerk und der momentanen Funkbereichsnummer eingetragen. Die Fremddatei FD1 erkennt aus der Funkrufnummer des Funkteilnehmers dessen Heimatüberleiteinrichtung ÜLE1' und benachrichtigt sie über die zwischen den Überleiteinrichtungen ÜLE1 und ÜLE1' geschalteten Datenleitungen. Schliesslich wird für diesen Funkteilnehmer auch in seiner Heimatdatei HD1' registriert, dass er aktiv ist und in welchem Funkbereich.

Inländische Funkteilnehmer sind mit dem beschriebenen Funknetz im gesamten Bundesgebiet erreichbar, weil bei einem Ruf an einen Funkteilnehmer seine Heimatdatei stets die richtige Auskunft über den Aufenthaltsort und den Betriebszustand des betreffenden Funkteilnehmers gibt. Um auch die Erreichbarkeit im Inland operierender, ausländischer Funkteilnehmer zu gewährleisten, ist der im zentralen Grenzbereich zu einem Nachbarland befindlichen Überleiteinrichtung ÜLE1 eine Ausländerdatei AD1 zugeordnet, in der die ausländischen Funkteilnehmer des betreffenden angrenzenden Nachbarlandes mit ihrer Funkrufnummer und ihrem momentanen Aufenthaltsort erfasst sind. Damit ist für die ausländischen Funkteilnehmer eine Ersatzheimatdatei eingerichtet, mit deren Hilfe auch sie bundesweit mit einem Ruf erreichbar sind.

Aus der Figur ist ersichtlich, dass nur der Überleiteinrichtung ÜLE1, nicht aber der Überleiteinrichtung ÜLE1' eine Ausländerdatei AD1 zugeordnet ist, da die Überleiteinrichtung ÜLE1 näher zu einem Auslandskopfamt jenseits der Landesgrenze LG liegt als die Überleiteinrichtung ÜLE1'.

Im angrenzenden Nachbarland wird entsprechend eine Ausländerdatei AD in dessen zentralen Einzugsgebiet eingerichtet.

Darüber hinaus ist eine zentrale Überleiteinrichtung ZÜLE vorgesehen, die hinsichtlich der Verkehrsorganisation im Netz eine zentrale Funktion ausübt (für die BRD z.B. in Frankfurt). Dieser zenralen Überleiteinrichtung ZÜLE ist eine universelle Ausländerdatei UAD zugeordnet, in der diejenigen ausländischen Funkteilnehmer einschliesslich ihrer Verkehrsdaten erfasst sind, die Ländern ohne gemeinsamen Grenzbereich mit dem Inland angehören.

Damit können sämtliche Funkteilnehmer — sowohl die inländischen als auch die ausländischen unabhängig von ihrer Länderzugehörigkeit — im Funkversorgungsgebiet des Inlandes unter ihrer eigenen Funkrufnummer aufgefunden werden.

Neben dem Auffinden jedes operierenden Teilnehmers mit nur einem Ruf werden auch die nicht gerade operierenden Teilnehmer festgestellt. In diesem Fall hat der Teilnehmer sein Funkgerät ausgeschaltet, was nach kurzer Zeit von der betreffenden Aktivdatei erkannt wird. Der nicht operierende Funkteilnehmer wird im Dateiensystem als inaktiv vermerkt. Wird dieser Teilnehmer nunmehr gerufen, so erhält der rufende Teilnehmer schon beim ersten Wahlversuch die Auskunft, dass der gerufene Teilnehmer vorübergehend nicht erreichbar ist.

In den bisherigen Ausführungen ist stets eine Kompatibilität der in- und ausländischen Funknetze unterstellt worden. Doch können im Inland operierende ausländische Funkteilnehmer unter ihrer eigenen Funkrufnummer auch dann aufgefunden werden, wenn die verschiedenen Funknetze eine Inkompatibilität zueinander aufweisen. In diesem Fall verwendet der ausländische Funkteilnehmer ein für das Inland geeignetes Funkgerät, in dem die eigene Funkrufnummer mittels einer Identifizierungskarte (z. B. eine Magnetkarte) eingespeichert ist.

## Patentansprüche

1. Mobiles Funknetz auf Landesebene, bestehend aus einer Anzahl Funkkonzentratoren (FUKO1 bis FUKO7, FUKO1' bis FUKO7') in einer gegenseitigen räumlichen Anordnung nach Art eines Zellularsystems mit sich überlappenden Funkbereichen, die mit Überleiteinrichtungen (ÜLE1, ÜLE1') zum öffentlichen Fernsprechnetz in Verbindung stehen, bei dem zum Auffinden mobiler Funkteilnehmer für einen automatischen Verbindungsaufbau den Überleiteinrichtungen Heimatdateien (HD1, HD1') zugeordnet sind, in denen die Verkehrsdaten der ihnen jeweils zugeordneten inländischen mobilen Funkteilnehmer, wie Betriebszustand und augenblickliche Funkbereichszugehörigkeit, fortlaufend registriert sind, wobei den Heimatdateien jeweils eine Fremddatei (FD1, FD1') zugeordnet ist und die Funkkonzentratoren jeweils eine Aktivdatei (AKD1 bis AKD7, AKD1' bis AKD7') aufweisen, dadurch gekennzeichnet, dass zum Auffinden mobiler ausländischer Funkteilnehmer zusätzlich Ausländerdateien (AD1) solchen Überleiteinrichtungen (ÜLE1) zugeordnet sind, an die zentrale Grenzbereiche zum Nachbarland darstellende Funkbereiche (1) mit ihren Funkkonzentratoren (FUKO1) angeschlossen sind, und in diesen Ausländerdateien die jeweils ausländischen Funkteilnehmer des angrenzenden Landes mit ihrer Funkrufnummer und ihrem momentanen Aufenthaltsort erfaßt sind, und daß zur einwandfreien Erfassung aller im Funknetz operierender mobiler Funkteilnehmer die Funkrufnummer jedes mobilen Teilnehmers in an sich bekannter Weise mit einer Landeskennung versehen ist.

2. Mobiles Funknetz nach Anspruch 1, dadurch gekennzeichnet, dass einer Überleiteinrichtung (ZÜLE), die hinsichtlich der Verkehrsorganisation im Netz eine zentrale Funktion ausübt, eine universelle Ausländerdatei (UAD) zugeordnet ist, in der diejenigen ausländischen Funkteilnehmer einschliesslich ihrer Funkrufnummer und ihrem momentanen Aufenthaltsort erfasst sind, die Ländern ohne gemeinsamen Grenzbereich mit dem Inland angehören.

3. Mobiles Funknetz nach einem der vorhergehenden Ansprüche, mit einer Inkompatibilität zu dem Funknetz eines ausländischen, im Inland operierenden Funkteilnehmers, dadurch gekennzeichnet, dass dieser ausländische Funkteilnehmer ein für das Inland geeignetes Funkgerät verwendet, in dem die eigene Funkrufnummer mittels einer Identifizierungskarte eingespeichert ist.

## Claims

1. Mobile radio network at the national level, consisting of a number of radio concentrators (FUKO1 to FUKO7, or FUKO1' to FUKO7') in a mutual spatial arrangement in the manner of a cellular system with overlapping radio coverages, which are connected to the public telephone network by means of mobile switching centres (ÜLE1, ÜLE1'), in which, for the purpose of finding mobile radio subscribers for automatic call set-up, the mobile switching centres are associated with home location registers (HD1, HD1') in which the traffic data of the national mobile radio subscribers in each case allocated to them, such as operating state and current radio coverage allocation, are continuously registered, the home location files in each case being associated with one visitor's register (FD1, FD1') and the radio concentrators in each case exhibiting one active register (AKD1 to AKD7, or AKD1' to AKD7'), characterised in that, for locating mobile international radio subscribers, international registers (AD1) are additionally allocated to those mobile switching centres (ÜLE1) to which radio areas (1) representing central border areas to the neighbouring country are connected with their radio concentrators (FUKO1), and in these international registers the respective international radio subscribers of the adjoining country are registered with their mobile call number and their current residence, and that, for properly covering all mobile radio subscribers operating in the radio network, the radio call number of each mobile subscriber is provided with a national code in a manner known per se.

2. Mobile radio network according to Claim 1, characterised in that a mobile switching network (ZÜLE), which exercises a central function with respect to the traffic control in the network, is allocated a universal international register (UAD) in which those international radio subscribers including their mobile call number and their current residence are registered which belong to countries without common border area with the home country.

3. Mobile radio network according to one of the preceding Claims, having an incompatibility with the radio network of an international radio subscriber operating in the home country, characterised in that this international radio subscriber uses a mobile set suitable for the home country, in which his own mobile call number is stored by means of an identification card.

## Revendications

1. Réseau mobile de stations radio à l'échelle d'un pays, constitué par un nombre de concentrateurs hertziens (FUKO1 à FUKO7, FUKO1' à FUKO7') selon une disposition spatiale réciproque à la manière d'un système cellulaire, avec des régions de radiocommunications en recouvrement, qui sont reliées par des dispositifs de transfert (ÜLE1, ÜLE1') au réseau téléphonique public, et dans lequel pour la localisation d'abonnés radio mobiles, pour l'établissement automatique d'une liaison, aux dispositifs de transfert sont associés des fichiers d'origines intérieures (HD1 à HD1'), dans lesquels les données de trafic des abonnés radio mobiles intérieurs, qui leur sont respectivement associés, tels que l'état de service et l'appartenance momentanée à une région de radiocommunications, sont enregistrées en permanence, tandis qu'aux fichiers d'origines intérieures sont associés des fichiers respectifs d'étrangers (FD 1 ; FD 1') et que les concentrateurs hertziens possèdent des fichiers actifs respectifs (AKD1 à AKD7, AKD1' à AKD7'), caractérisé par le fait que pour la détection d'abonnés radio étrangers mobiles, des fichiers d'étrangers (AD1) sont associés en supplément à des dispositifs de transfert (ÜLE1), auxquels des régions de radiocommunications (1) représentant des régions frontalières centrales jouxtant le pays voisin, sont raccordées par leurs concentrateurs hertziens (FUKO1), et que dans ces fichiers d'étrangers, les abonnés radio étrangers du pays limitrophe sont recensés par leur numéro d'abonné radio et par leur lieu momentané de séjour, et que pour la détection parfaite de tous les abonnés radio mobiles opérant dans le réseau de stations de radio, le numéro de chaque abonné radio mobile est muni, de façon connue en soi, d'un indicatif du pays.

2. Réseau mobile de stations radio suivant la revendication 1, caractérisé par le fait qu'à un dispositif de transfert (ZÜLE), qui exerce une fonction centrale du point de vue de l'organisation du trafic dans le réseau, est associé un fichier universel d'étrangers (UAD) dans lequel sont recensés les abonnés radio étrangers, qui appartiennent à des pays sans zone frontalière commune avec le pays intérieur, ainsi que leur numéro d'appel et leur lieu momentané de séjour.

3. Réseau mobile de stations de radio suivant l'une des revendications précédentes, présentant une incompatibilité avec le réseau de stations radio dont fait partie un abonné radio étranger opérant à l'intérieur, caractérisé par le fait que cet abonné radio étranger utilise un appareil radio approprié pour l'intérieur et dans lequel son propre numéro d'abonné radio est mémorisé au moyen d'une carte d'identification.

AD

LG

7
FUKO7
AKD7

2
FUKO2
AKD2

ÜLE1

6
FUKO6
AKD6

HD1
FD1

1
FUKO1
AKD1

AD1

3
FUKO3
AKD3

5
FUKO5
AKD5

4
FUKO4
AKD4

ZÜLE

UAD

7'
FUKO7'
AKD7'

2'
FUKO2'
AKD2'

ÜLE1'

6'
FUKO6'
AKD6'

HD1'
FD1'

1'
FUKO1'
AKD1'

3'
FUKO3'
AKD3'

5'
FUKO5'
AKD5'

4'
FUKO4'
AKD4'